## Europäisches Patentamt
## European Patent Office
## Office européen des brevets

(19)

(11) Veröffentlichungsnummer : **0 024 546**
**B1**

(12)

# EUROPÄISCHE PATENTSCHRIFT

(45) Veröffentlichungstag der Patentschrift :
**01.09.82**

(51) Int. Cl.³ : **F 16 B 21/04, B 60 N 3/02**

(21) Anmeldenummer : **80104310.0**

(22) Anmeldetag : **23.07.80**

(54) **Befestigung von Einbauteilen auf Grundflächen.**

(30) Priorität : **29.08.79 DE 2934788**

(43) Veröffentlichungstag der Anmeldung :
**11.03.81 (Patentblatt 81/10)**

(45) Bekanntmachung des Hinweises auf die Patenterteilung : **01.09.82 Patentblatt 82/35**

(84) Benannte Vertragsstaaten :
**DE FR GB IT SE**

(56) Entgegenhaltungen :
**DE A 2 531 368**
**FR A 1 231 735**
**FR A 1 544 628**
**FR A 2 261 898**
**FR A 2 361 245**
**FR A 2 368 629**

(73) Patentinhaber : **Gebr. Happich GmbH**
**Postfach 10 02 49 Clausenbrücke 1**
**D-5600 Wuppertal 1 (DE)**

(72) Erfinder : **Janz, Joachim**
**Jägerhofstrasse 116 b**
**D-5600 Wuppertal 1 (DE)**

(74) Vertreter : **Rehders, Jochen**
**c/o Fa. Gebr. Happich GmbH Postfach 10 02 49**
**Clausenbrücke 1**
**D-5600 Wuppertal 1 (DE)**

EP 0 024 546 B1

Imprimerie Jouve, 18, rue St-Denis, 75001 Paris, France

## Befestigung von Einbauteilen auf Grundflächen

Die Erfindung bezieht sich auf eine Befestigung von Einbauteilen auf Grundflächen mit den im Oberbegriff des Anspruchs 1 aufgeführten Merkmalen.

Es ist bekannt (DE-A-2 531 368), die freien Enden von Einlagen bei Armlehnen und auch bei Haltegriffen zu einem Teil einer Befestigungsausbildung umzugestalten, die mit einem anderen Befestigungsteil, wie einem in der Karosseriewand aufgenommenen Befestigungsklips, eine bedingt brauchbare Befestigung ergeben, und zwar dann, wenn keine oder nur eine geringe Polsterfläche die Türinnenwand abdeck und außerdem Auflaufschrägen gebildet sind, die im Sinne einer Einrenkverbindung (Bajonettverbindung) den einen Befestigungsteil gegen den anderen anzieht. Außer der Einsatzmöglichkeit einer solchen Verbindung, bei den wenigen noch dürftig in der Innenausstattung ausgebildeten Fahrzeugen, besteht ein weiterer Nachteil, weil Fertigungs- und Material-Toleranzen so ungünstig liegen können, daß die Anzug-Ausbildung (Auflaufschräge) nicht ausreicht, die notwendigerweise taumelsichere Befestigung zu erreichen.

Da es bei Armlehnen und auch bei Haltegriffen besonders darauf ankommt, ihre Befestigungssockel taumelsicher zu befestigen, ist es auch notwendig, die Einsteckverbindung, um die es sich in jedem Fall handelt, darauf abzustellen, nämlich daß das eingesteckte Befestigungsteil in allen Richtungen sicher haltend aufgenommen ist, weil sonst wegen der immer wiederkehrenden unterschiedlichen, in jeder Richtung auftretenden Belastung sich die Verbindung lockert und letztlich ganz löst. Es ist ebenfalls vorgekommen, daß bei ungeeigneter Ausbildung des eingesteckten Befestigungsteiles, beispielsweise wenn es sich um eine im Querschnitt rechteckige Ausbildung handelt, diese durch die Beanspruchung während des Gebrauchs nach einer gewissen Zeit bricht.

Es ist Aufgabe der Erfindung, eine Befestigung von Einbauteilen auf Grundflächen zu schaffen, welche in der Konstruktion einfach ist, größere Unterschiede in den Bautiefen überbrückt, allseitig sicher vom Gegenbauteil aufgenommen ist und selbst eine ausreichend hohe statische Festigkeit aufweist.

Dieses Ziel wird erfindungsgemäß durch die im Anspruch 1 aufgeführten Merkmale erzielt.

Harpunenartige Befestigungen sind bei Einsteckverbindungen bekannt (FR-A-2 368 629). Dort wirkt eine umlaufende Rastverzahnung, die mehrere in Einsteckrichtung hinter ein anderliegende Zähne aufweist, mit einer elastischen mit Gegenzähnen versehenen Rastscheibe zusammen. Das Einrasten erfolgt dabei nicht bei einer Verdrehung sondern durch Einklipsen. Diese Verbindung kann nicht mehr ohne weiteres gelöst werden.

Bei der erfindungsgemäßen Ausführung wird in einfacher Weise ein statisch hochwertiges Einsteckteil gebildet, welches voll, bis auf die Harpunenausbildung, formschlüssig vom Befestigungsklips aufgenommen werden kann. Bei einem vollständigen Rohr reicht es aus, daß die außen umlaufende Mantelfläche allein formschlüssig in einem Durchbruch des Befestigungsschlitzes aufgenommen ist. Bei einem in Längsrichtung verlaufenden Teil eines Rohres wird man zweckmäßigerweise den Befestigungsklips so gestalten, daß auch die innere Mantelfläche des Rohrteiles formschlüssig aufgenommen ist. Ferner ist anzuführen, daß trotz Erreichung optimaler Befestigungswerte die konstruktive Ausgestaltung sich vereinfacht hat.

Um das Rohr oder das Rohrteil durch die Harpunenausbildung wenig zu schwächen, wird man zu der Harpunenausbildung Sicken verwenden, welche man — und das ist entscheidend für die Erhaltung der Stabilität des Rohres bzw. des Rohrteiles — nicht bis in die freie Kante auslaufen läßt, sie in einem Teilbereich der Rohroberfläche anlegt, zumindest vor den Seitenkanten des Rohres enden läßt. Werden besonders präzise ausgebildete Sicken verlangt, wird man diese spanabhebend formen müssen. Es erscheint jedoch ausreichend, die Sicken zu prägen bzw. durch ein Schlagwerkzeug zu gestalten.

Die Querschnittsausbildung zu einem Rohr oder einem Rohrteil schließt eine geringe Querschnittsveränderung nicht aus, weil der erfindungsgemäße Vorteil des Querschnittes vollauf bestehen bleibt und auch das Wesentliche der Erfindung ist. Eine solche geringe Querschnittsveränderung ist eine flügelartig abstrebende Ausbildung der Längskanten in angenähert radialer Richtung oder eine Materialdopplung, insbesondere eine Kantenfaltung, wobei diese zweckmäßigerweise am Rohrquerschnitt vorgenommen werden kann oder aber auch an den flügelartig abstrebenden Kanten des Rohres.

Im allgemeinen ist davon auszugehen, daß die Harpunenausbildung dem vom Halteklips aufgenommenen eingesteckten Befestigungselement, wie dem Rohr oder dem Rohrteil, zugeordnet ist ; es ist aber auch möglich, dem Halteklips die Harpunenausbildung zuzuordnen und dem eingesteckten Teil lediglich eine die Vertiefungen der Harpunenausbildung ausnutzende Sperrausbildung.

Die Einstecktiefe der Harpunenausbildung wird Befestigungen von Armlehnen und Haltegriffen üblicherweise durch das Ende der Polster, also den Stirnflächen bei Anlage an der Karosseriewand, begrenzt. Die innere Sicherheit im Fahrzeug wird aber auch dahingehend ausgebaut, daß auch die Armlehnen und Haltegriffe bei einem Aufprall zumindest teilweise zurückweichen, so daß die Differenz ihrer Scheitelhöhe zur Karosserie-Innenwand geringer wird. Dieses Erfordernis wird ebenfalls, zumindest teilweise, von der erfindungsgemäßen Ausbildung erfüllt, nämlich dann, wenn die Einsteckbewegung ein größeres Stück über den möglichen Einsatz der Befestigung hinaus geführt wird ; denn die zur Begrenzung der Befestigung dienende Polsterfläche würde bei einem Aufprall des Körpers eines Fahrzeuginsassen nicht standhalten und zurückweichen.

Geht man davon aus, daß der Befestigungsklips im allgemeinen ein Kunststoffkörper, wie ein Kunststoffspritzling, ist und dadurch weniger formbeständig als die aus Metall bestehende Einsteckausbildung fist, dann ist es zweckmäßig, daß die die Harpunenausbildung aufnehmende Gegenausbildung im Befestigungsklips eine in einer Aufnahme des Befestigungsklipses gehaltene Sperrfeder ist.

Auf der Zeichnung ist die Erfindung in mehreren Ausführungsbeispielen dargestellt. Es zeigen

Figuren 1 und 2  in schaubildlicher/explosiver und geschnittener Darstellung eine Befestigungsausbildung mit einer sickenförmigen Harpunenausbildung.

Figuren 3 und 4  weitere Ausführungsbeispiele einer Befestigungsausbildung in Explosionsdarstellung.

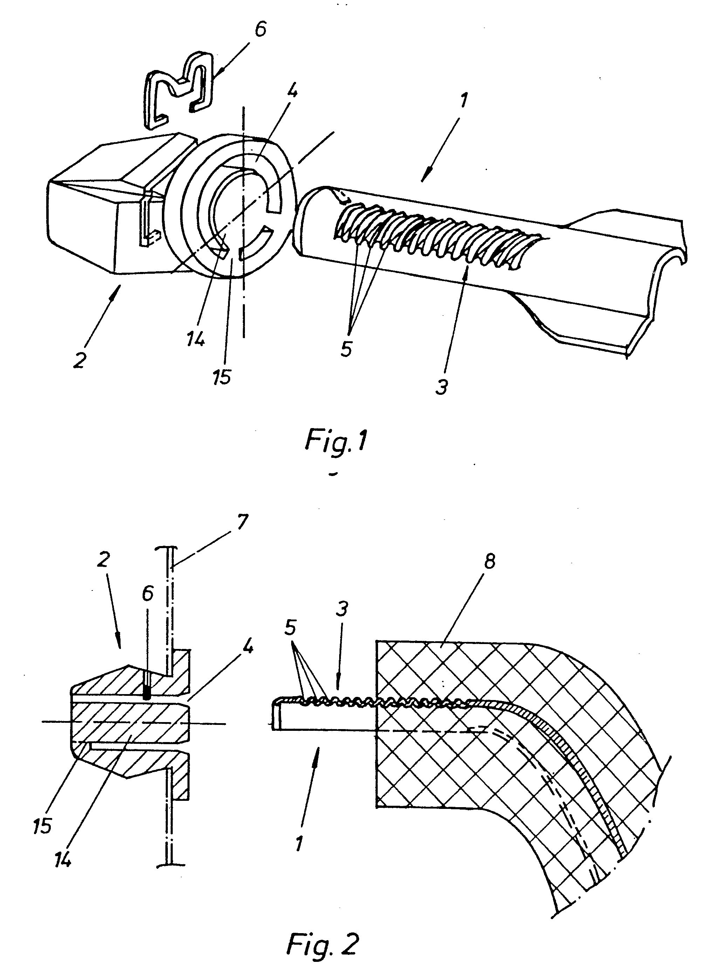

Jeweils generell ist mit 1 das als Befestigungsteil ausgebildete freie Ende einer Armlehnen- bzw. Haltegriff-Einlage, im folgenden kurz Einsteckausbildung genannt, mit 2 ein Befestigungsklips, mit 3 eine Harpunenausbildung und mit 4 eine Aufnahme für die Einsteckausbildung 1 bezeichnet. Beim Ausführungsbeispiel nach Fig. 1 und 2 ist die Einsteckausbildung 1, ausgehend von einem halbrohrförmigen und mit Seitenflügeln versehenen Bereich zum freien Ende hin bis auf einen breiteren Längsschlitz rohrförmig ausgebildet. Die Aufnahme 4 im Befestigungsklips 2 ist auf dieses nicht vollständig rund durchgeführte Rohr abgestimmt. Dabei ist dem Befestigungsklips 2 ein Stopfen 14 zugeordnet, so daß die Einsteckausbildung 1 bis auf die schmalen Seitenkanten formschlüssig aufgenommen ist. Der Stopfen 14 ist über ausbrechbare Wandungen 15 mit dem übrigen Teil des Befestigungsklipses 2 verbunden.

Die Harpunenausbildung 3 besteht in diesem Ausführungsbeispiel aus Sicken 5, die nicht in den freien Rand der Einsteckausbildung 1 auslaufen. Die Sperrausbildung für die Sicken 5 wird durch eine etwa M-förmige Feder 6 gebildet, welche in einem radial angeordneten Schlitz des Befestigungsklipses 2 mit den nach einwärts gebogenen Füßen sich selbst haltend, aufgenommen ist. Das nach einwärts gerichtete Mittelstück der Feder 6 wirkt demnach mit den Sicken 5 im Sinne einer Harpunenbefestigung zusammen. Der Befestigungsklips 2 ist, wie aus Fig. 2 ersichtlich, in bekannter Weise in einem Durchbruch einer Wandung 7 der Karosserie auszugs- und drehsicher aufgenommen. Der Fig. 2 ist ebenfalls ein Teil eines Formkörpers 8 zu entnehmen, welcher im allgemeinen ein Polsterteil, wie ein Schaumteil, ist und ein Ende einer Armlehne oder eines Haltegriffes sein kann.

Die erfindungsgemäße Befestigung ist, da es sich um eine lösbare Befestigung handelt, immer nur für ein Ende einer Armlehne oder eines Haltegriffes ausgelegt, weil für die Aufrechterhaltung der Steckverbindung immer ein bestimmter Bereich in radialer Stellung von Einsteckausbildung 1 und Befestigungsklips 2 erhalten bleiben muß. Diese bestimmte radiale Stellung wird durch die weitere Befestigung der Armlehne bzw. des Haltegriffes gesichert.

Die Verbindung von Einsteckausbildung 1 und Befestigungsklips 2 miteinander geschieht durch einfaches Einstecken in die für die Befestigung wesentliche radiale Stellung der beiden Teile zueinander, wobei die Einstecktiefe, entsprechend der Harpunenausbildung 3, automatisch anpaßbar ist. Das Lösen dieser Verbindung geschieht durch eine radiale Drehung der Einsteckausbildung 1, weil der Erngriff der Feder 6 aus der Sicke 5 über das Sickenende hinaus gelöst wird.

Die Einsteckausbildung 1, genauer ausgedrückt, der mit der Aufnahme 4 korrespondierende Querschnitt, ist länger ausgebildet als es nur zur Überbrückung aller wahrscheinlichen Toleranzen notwendig ist. Diese Ausbildung dient dem weiteren Ausbau der inneren Sicherheit im Fahrzeug. Bei einem Aufprallunfall auf die mit der erfindungsgemäßen Befestigung gehaltenen Armlehne bzw. Haltegriff, weicht der polsterähnliche Formkörper 8 zurück und dadurch kann sich das angebaute Teil näher an die Befestigungsfläche heran verlagern. Eine so merklich verringerte Scheitelfläche von hervorstehenden Anbauteilen kann Prellungen oder sogar Knochenbrüche verhindern.

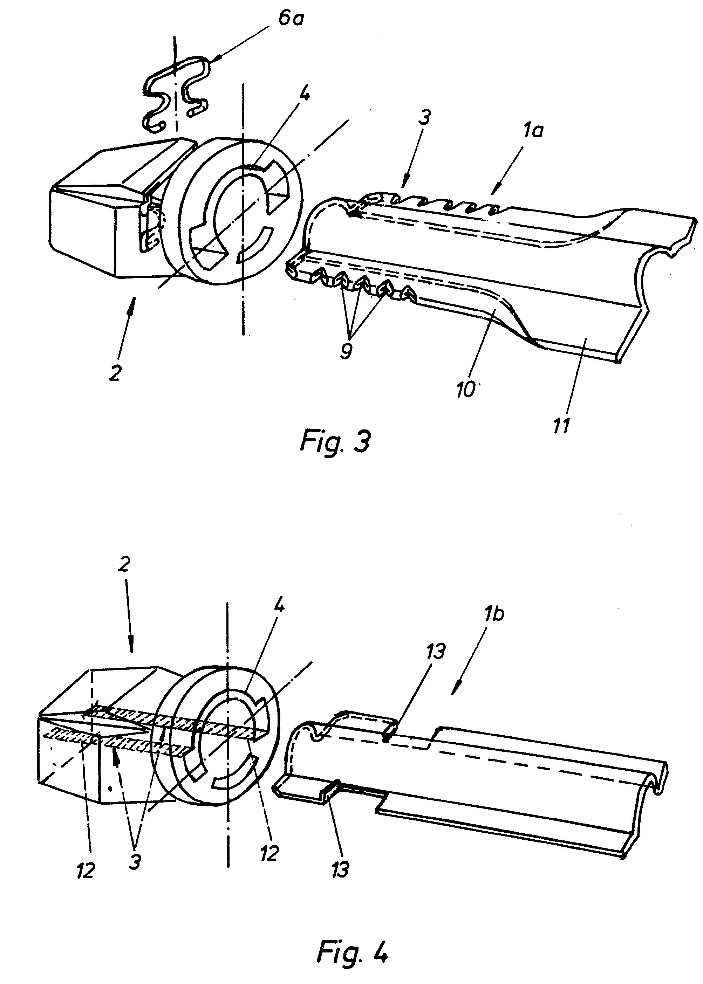

Das Ausführungsbeispiel nach Fig. 3 weicht nur wenig von dem nach Fig. 1 bzw. 2 ab. Bei der Einsteckausbildung 1a sind anstatt der Sicken 5 Zähne 9 gebildet. Diese sind, um eine möglichst breite und tragfähige Auflagefläche zu erzielen, einer Materialdopplung 10 zugeordnet, die von Flügeln 11 der Einsteckausbildung 1a ausgehen. Ebenfalls geringfügig verändert ist die M-förmige Feder 6a ; sie ist so gestaltet, daß sie die gegenüberliegenden Zähne 9 beidseitig sperrt.

Die Fig. 4 zeigt ebenfalls eine Befestigungsausbildung mit einer Harpunenausführung, wobei jedoch die spezielle Harpunenausbildung eine Verzahnung 12 bildet, die im Innern des Befestigungsklipses 2 angeordnet ist. Die Einsteckausbildung 1b ist demnach mit einer einzigen, jedoch doppelseitig angeordneten Nase 13 versehen. Diese Nasen 13 der beiden Seiten sind im Drehsinn gleichartig ausgestellt, so daß sie mit ihren freien Kanten bei einer Belastung sperren und sinngemäß im entgegengesetzten Drehsinn entsperrbar sind.

## Ansprüche

1. Befestigung von Einbauteilen auf Grundflächen, wie eine Armlehne oder ein Haltegriff im Innern der Karosserie von. Fahrzeugen, « mit mindestens Zwei in Abstand von ein and erliegenden Befestigungs verbindungen von denen eine das Einbateil gegen Drehung sichert und ein Teil der andeven Befestigungsverbindung das freie Ende (1, 1a, 1b) einer Armlehnen- oder Haltegriff-Einlage und das andere Teil ein von der Karosseriewand aufgenommener Befestigungs-Klips (2) ist und eine radiale Winkelstellung der Befestigungsteile zueinander, eine über eine Einwenk- bzw- Bajonett- Verbindung (5, 6 ; 9, 6a ; 13, 12) gebildete Sperrlage ergibt und in einer anderen radialen Winkelstellung eine lösbare Stellung der Befestigungsteile gebildet ist, webei ein Teil der Befestigung, wie das Ende (1, 1a, 1b) einer Armlehnen- oder Haltegriff-Einlage, zu einem Rohr oder einem in Einsteck-Längsrichtung verlaufenden Teil eines Rohres ausgebildet ist, das zumindest mit seiner äußeren Mantelfläche formschlüssig in einer Aufnahme (4) des Befestigungsklipses (2) geführt ist, dadurch gekennzeichnet, daß wahlweise dem Rohr bzw. dem Rohrteil oder dem Befestigungsklips (2) eine Harpunenausbildung (3) zugeordnet ist, die mehrere in Einsteckmichtung hintereinanderliegende Vertiefungen (Sicken 5, Zähne 9, 12) aufweist, sodaß ein Einvenken der Verbindung bei Verschiedenen Einstecktiefen möglich ist.

2. Befestigung nach Anspruch 1, dadurch gekennzeichnet, daß das rohrförmige Ende der Befestigung außer mit der äußeren Mantelfläche auch mit der inneren Mantelfläche formschlüssig in einer Aufnahme (4) des Befestigungsklipses (2) aufgenommen ist.

3. Befestigung nach Anspruch 1 oder 2, dadurch gekennzeichnet, daß die Harpunenausbildung (3) aus Sicken (5) besteht, deren freier Auslauf vor den Seitenkanten des Rohres oder des Rohrteiles endet.

4. Befestigung nach Anspruch 3, dadurch gekennzeichnet, daß die Sicken (5) aus Prägungen bestehen.

5. Befestigung nach Anspruch 1 oder 2, dadurch gekennzeichnet, daß bei der Ausbildung des Endes der Armlehnen- oder Haltegriff-Einlage zu einem Rohrteil die Längskanten in radialer Richtung abstrebend flügelartig ausgebildet sind.

6. Befestigung nach Anspruch 1, 2 oder 5, dadurch gekennzeichnet, daß die Harpunenausbildung (3) einer Materialdopplung (10), wie einer Kantenfaltung, im Bereich der Längskanten eines Rohrteiles angeordnet ist.

7. Befestigung nach Anspruch 1 oder 2, dadurch gekennzeichnet, daß die Harpunenausbildung (3) der Befestigungsausbildung und die Aufnahme (4) wahlweise dem freien Ende der Armlehnen- oder Haltegriff-Einlage oder dem Befestigungsklips (2) im Bereich der äußeren Mantelfläche des freien Endes der Armlehnen- oder Haltegriff-Einlage zugeordnet ist.

8. Befestigung nach einem oder mehreren der vorangehenden Ansprüche, dadurch gekennzeichnet, daß der die formschlüssige Anlage der inneren Mantelfläche der Armlehnen- oder Haltegriffeinlage bildende Stopfen (14) des Befestigungsklipses (2) mit dem äußeren Teil des Befestigungsklipses (2) über aus- oder abbrechbare Wandungen (15) verbunden ist.

9. Befestigung nach einem oder mehreren der vorangehenden Ansprüche, dadurch gekennzeichnet, daß die die Harpunenausbildung (3) aufnehmende Gegenausbildung im Befestigungsklips (2) eine in einer Aufnahme des Befestigungsklipses (2) gehaltene Sperrfeder (6 bzw. 6a) ist.

## Claims

1. A mounting for a fitting, such as an arm-rest or hand-grip in the interior of the body of a vehicle, to be fastened to a surface, the mounting comprising at least two spacedly disposed fastening connections one of which secures the fitting against rotation, in which one component of the other fastening connection is the free end portion (1, 1a, 1b) of the arm-rest or hand-grip while the other component is a clamping socket (2) retainable by the body wall, in which in a radial plane one angular position of the fastening components relative to one another results in their being locked by means of an insert-twist or a bayonet connection (5, 6 ; 9, 6a ; 13, 12) while another angular position in the radial plane forms a release position of the fastening components, in which the one component of the other fastening connection, such as the end portion (1, 1a, 1b) of the arm-rest or hand-grip, is constructed as a tube, or as a sector-like portion of the tube extending longitudinally in the direction of insertion, in which at least the external surface of said one component matches a surface of and is retainable in an opening (4) of the clamping socket (2), characterised in that selectively the tube, or the tube portion respectively, or the clamping socket (2) is provided with a barb structure (3) having a plurality of indentations (corrugations 5, teeth 9, 12) successively disposed along the direction of insertion so as to permit the insert-twist connection to be made at different depths of insertion.

2. A mounting according to claim 1, characterised in that the internal surface of the tube-shaped end portion of the one fastening component, in addition to its external surface, matches another surface of and is retainable by the opening (4) of the clamping socket (2).

3. A mounting according to claim 1 or claim 2, characterised in that the barb structure (3) is formed by corrugations the free ends of which terminate short of the lateral edges of the tube or tube portion.

4. A mounting according to claim 3, characterised in that the corrugations (5) comprise embossed portions.

5. A mounting according to claim 1 or 2, characterised in that when the end of the arm-rest or handgrip is constructed as a tube, the longitudinal edges are constructed as wings, bracing in the radial direction.

6. A mounting according to claim 1, 2 or 5, characterised in that the barb structure (3) is disposed at a place (10) where the material is doubled, e.g. an edge fold, at the longitudinal edges of a tube part.

7. A mounting according to claim 1 or 2, characterised in that the barb structure (3) of the fastening connection and the opening (4) are optionally associated with the free end of the arm-rest or hand-grip or the clamping socket (2) at the outer surface of the free end of the arm-rest or hand-grip.

8. A mounting according to one or more of the preceding claims, characterised in that the plug (14) of the clamping socket (2) ensuring positive abutment of the inner surface of the arm-rest or hand-grip is connected to the outer part of the clamping socket (2) by walls (15) which can be broken out or away.

9. A mounting according to one or more of the preceding claims, characterised in that the matching structure in the clamping socket (2) receiving the barb structure (3) is a locking spring (6 or 6a) held in an opening in the clamping socket (2).

**Revendications**

1. Fixation d'éléments rapportés sur des surfaces de base, tels qu'un accoudoir ou une poignée de maintien à l'intérieur de la carrosserie de véhicules automobiles, comprenant au moins deux fixations disposées à une certaine distance l'une de l'autre, l'une d'elles empêchant l'élément de tourner et une partie de l'autre fixation étant constituée par l'extrémité libre (1, 1a, 1b) d'un accoudoir ou d'une poignée alors que l'autre partie est constituée par un clips de fixation (2) incorporé dans la paroi de la carrosserie et déterminant, dans une position angulaire radiale des deux éléments de fixation l'un par rapport à l'autre, une position de blocage formée par une liaison par enclenchement ou par une liaison à baïonnette (5, 6 ; 9, 6a ; 13, 12) et dans une autre position angulaire radiale une position de dégagement des éléments de fixation, une partie de la fixation telle que l'extrémité (1, 1a, 1b) de l'armature d'un accoudoir ou d'une poignée de maintien étant constituée sous forme d'un tube ou d'une section de tube en direction longitudinale de l'enfoncement, le tube étant introduit dans un évidement (4) de forme correspondante du clips de fixation (2) au moins par sa surface d'enveloppe externe, caractérisée en ce qu'on associe au tube, à la section de tube ou au clips de fixation (2) un élément en forme de harpon (3) comprenant plusieurs encoches (rainures 5, dents 9, 12) disposées les unes derrière les autres en direction de l'enfoncement, de manière à pouvoir enclencher la liaison sur des profondeurs d'enfoncement variables.

2. Fixation selon la revendication 1, caractérisée en ce que l'extrémité de forme tubulaire de la fixation pénètre par concordance de forme dans un évidement (4) du clips de fixation (2) par l'intermédiaire de sa surface d'enveloppe externe et également de sa surface d'enveloppe interne.

3. Fixation selon la revendication 2, caractérisée en ce que la partie en harpon (3) est constituée par des rainures (5) qui se terminent avant les rebords latéraux du tube ou de la section de tube.

4. Fixation selon la revendication 2, caractérisée en ce que les rainures (5) sont constituées par estampage.

5. Fixation selon la revendication 1 ou 2, caractérisée en ce que pour la réalisation de l'extrémité de l'armature de l'accoudoir ou de la poignée de maintien sous forme tubulaire, les bords longitudinaux sont une forme en aile dans le sens radial.

6. Fixation selon la revendication 1, 2 ou 5, caractérisée en ce que la partie en harpon (3) d'une partie doublée (10) du matériau, telle un bord à replis, est disposée dans la zone des bords longitudinaux d'une partie tubulaire.

7. Fixation selon la revendication 1 ou 2, caractérisée en ce que la partie en harpon (3) de la fixation et l'évidement (4) sont affectés soit à l'extrémité libre de la garniture de l'accoudoir ou de la poignée de maintien, soit au clips de fixation (2) dans la zone de l'enveloppe extérieure de l'extrémité libre de la garniture d'accoudoir ou de la poignée.

8. Fixation selon l'une ou plusieurs des revendications précédentes, caractérisée en ce que le bouchon (14) du clips de fixation (2) formant contreforme de l'enveloppe interne de la garniture de l'accoudoir ou de la poignée de maintien est relié à la partie externe du clips de fixation par des parois (15) pouvant être arrachées.

9. Fixation selon l'une ou plusieurs des revendications précédentes, caractérisée en ce que la contrepartie dans le clips de fixation (2) recevant la partie en harpon (3) est un ressort (6, 6a) d'arrêt maintenu dans un évidement du clips de fixation (2).

Fig.1

Fig. 2

1

Fig. 3

Fig. 4